(19) Europäisches Patentamt
European Patent Office
Office européen des brevets

(11) **EP 2 932 139 B1**

(12) **FASCICULE DE BREVET EUROPEEN**

(45) Date de publication et mention
de la délivrance du brevet:
**15.11.2017 Bulletin 2017/46**

(51) Int Cl.:
***F16J 15/02*** *(2006.01)* ***H01R 13/52*** *(2006.01)*

(21) Numéro de dépôt: **13803157.0**

(22) Date de dépôt: **19.11.2013**

(86) Numéro de dépôt international:
**PCT/FR2013/052776**

(87) Numéro de publication internationale:
**WO 2014/091102 (19.06.2014 Gazette 2014/25)**

(54) **JOINT POUR CONNEXION ELECTRIQUE**

DICHTUNG FÜR EINE ELEKTRISCHE VERBINDUNG

GASKET FOR AN ELECTRICAL CONNECTION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **11.12.2012 FR 1203368**

(43) Date de publication de la demande:
**21.10.2015 Bulletin 2015/43**

(73) Titulaire: **Société d'Exploitation des Procédés
Maréchal
S.E.P.M.
94410 Saint Maurice (FR)**

(72) Inventeurs:
• **ZAGROUN, Francis
F-92200 Neuilly sur Seine (FR)**
• **DOS SANTOS, Johnny
F-92380 Garches (FR)**
• **CHOISELAT, Romain
F-75012 Paris (FR)**
• **ARFAOUI, Sabri
F-93150 Le Blanc-Mesnil (FR)**

(74) Mandataire: **Milien, Jean-Baptiste Aurélien et al
Cabinet Beau de Loménie
158, rue de l'Université
75340 Paris Cedex 07 (FR)**

(56) Documents cités:
**GB-A- 770 628      GB-A- 1 141 462
GB-A- 2 016 623      US-A- 4 173 349
US-A- 4 421 373**

**Description**

DOMAINE DE L'INVENTION

La présente invention est relative à un joint pour une connexion électrique du genre comprenant un carter socle et un carter fiche, selon la revendication 1, ainsi qu'à une telle connexion munie d'un tel joint, selon la revendication 7.

ETAT DE LA TECHNIQUE ANTERIEURE

Les connexions électriques du genre comprenant un carter socle et un carter fiche sont bien connues : il faut assurer une étanchéité entre le carter socle et le carter fiche, lorsque la connexion est réalisée, vis-à-vis tant des liquides, et en particulier de l'eau, que des poussières contenues dans l'atmosphère.
Il est apparu que si les joints actuels satisfont aux normes actuelles, néanmoins ils ont tendance à augmenter les efforts d'enclenchement. Ils peuvent, par ailleurs, s'avérer peu tolérants en particulier :

- aux différences dimensionnelles des éléments en regard lorsque ceux-ci sont neufs ;
- aux variations dimensionnelles au cours du temps pouvant par exemple entraîner un bâillement et notamment dues à un relâchement de contraintes ou suite aux variations climatiques ; et,
- à la présence de bavures plus ou moins importantes sur les plans de joints des pièces.

US4173349 divulgue un joint annulaire pour une connexion électrique comprenant une embase et une jupe biconique présentant une concavité orientée vers l'intérieur du joint, selon le préambule de la revendication 1.

PRESENTATION DE L'INVENTION

Aussi un des buts de la présente invention est-il de fournir un joint pour une connexion électrique du genre comprenant un carter socle et un carter fiche, qui permet d'obvier les inconvénients ci-dessus tout en ne nuisant pas à la qualité de l'étanchéité et voire même en l'améliorant.
Un autre but de l'invention est de fournir un tel joint qui permet d'améliorer la vitesse de coupure de l'arc électrique lors du désaccouplement du carter fiche du carter socle.
Un but supplémentaire de l'invention est de fournir une connexion électrique du genre comprenant un carter socle et un carter fiche muni d'un tel joint.
Ces buts, ainsi que d'autres qui apparaîtront par la suite, sont atteints par un joint annulaire pour une connexion électrique du genre comprenant un carter socle et un carter fiche, ledit joint s'étendant selon une direction axiale et comprenant une embase cylindrique surmontée d'une jupe s'étendant axialement depuis l'embase, la jupe présentant une paroi intérieure, une paroi extérieure et un bord libre arrondi, la paroi intérieure et la paroi extérieure présentant chacune, vues en coupe radiale, une forme courbe continue, l'épaisseur de la jupe diminuant de façon non linéaire et continue depuis l'embase vers le bord libre, la jupe présentant une concavité tournée vers l'intérieur du joint grâce à quoi la jupe se replie sur elle-même lorsqu'une contrainte axiale est exercée sur le bord libre.
On comprend que les directions axiale et radiale correspondent respectivement aux directions définies par la côte et le rayon dans un système de coordonnées cylindrique. La direction axiale est donc indiquée par l'axe de révolution du joint. On comprend également que les adjectifs « intérieur » et « extérieur » sont utilisés en référence à la direction radiale de sorte qu'une partie intérieure (i.e. radialement intérieure) est plus proche de l'axe du joint qu'une partie extérieure (i.e. radialement extérieure).
La configuration de parois courbes et l'orientation de la concavité de la jupe permet au joint d'être particulièrement efficace vis-à-vis de la prévention des risques de déformation et de bâillement du bord libre. Cette configuration permet également une compensation aisée d'éventuels défauts de surface des carters socle et fiche, par exemple des bavures. Enfin, lorsqu'une contrainte axiale est exercée sur le bord libre, par exemple lors du branchement d'un carter socle avec un carter fiche, la jupe forme en se repliant sur elle-même un ressort à compression qui génère une poussée axiale lors de la déconnexion des carters, cette poussée permettant de réduire le temps de coupure de l'arc électrique entre les contacts électriques des carters.
Dans certains modes de réalisation, la paroi extérieure de la jupe présente une courbure telle qu'elle déborde de l'embase et que le bord libre est situé à l'intérieur du joint par rapport à l'embase.
Une telle courbure améliore la prévention des risques de déformation et de bâillement du bord libre, la compensation d'éventuels défauts de surface des carters socle et fiche, ainsi que l'effet ressort de la jupe.
On comprend donc que la paroi extérieure fait radialement saillie vers l'extérieur du joint, au-delà de l'embase. En d'autres termes, la paroi extérieure présente un rayon maximal supérieur au rayon extérieur maximal de l'embase.

De même, on comprend que le bord libre présente un rayon inférieur au rayon intérieur minimal de l'embase.

Dans certains modes de réalisation, la jupe présente au moins une nervure disposée au voisinage du bord libre.

La nervure s'étend par exemple sur toute la longueur azimutale du bord libre. Pour rappel, la direction azimutale correspond la direction décrivant un anneau autour de la direction axiale. Ainsi, la direction azimutale correspond à la direction définie par l'angle dans un système de coordonnées cylindrique.

Par le terme « voisinage », on entend la portion d'extrémité de la jupe s'étendant sur environ 20% de la longueur axiale de la jupe depuis le bord libre.

Une telle nervure permet de rigidifier le bord libre, grâce à quoi on améliore sa tenue mécanique dans le temps, ce qui améliore l'étanchéité du joint. Cette nervure permet notamment d'améliorer la prévention des risques de déformation et de bâillement du bord libre. La nervure permet aussi d'améliorer la compensation d'éventuels défauts de surface des carters socle et fiche, par exemple des bavures. Enfin, la nervure améliore également l'effet ressort du joint lors du branchement des carters socle et fiche, ce qui permet d'augmenter la poussée exercée par le joint lors de la déconnexion des carters, et donc la coupure de l'arc électrique entre les contacts électriques des carters.

Dans certains modes de réalisation, ladite au moins une nervure est disposée à l'extérieur de la jupe.

Une telle nervure permet également d'améliorer l'étanchéité du joint en formant une lèvre configurée pour coopérer avec l'élément coopérant avec le bord libre et repliant la jupe sur elle-même. La surface de jointure est ainsi agrandie, ce qui améliore l'étanchéité du joint.

Dans certains modes de réalisation, ladite au moins une nervure est disposée à l'intérieur de la jupe.

Une telle nervure est particulièrement efficace pour rigidifier le bord libre.

On comprend bien entendu que le joint peut présenter une unique ou plusieurs nervures disposées à l'extérieur de la jupe, ou bien une unique ou plusieurs nervures disposées à l'intérieur de la jupe, ou encore une ou plusieurs nervures disposées à l'intérieur de la jupe et une ou plusieurs nervures disposées à l'extérieur de la jupe.

Dans certains modes de réalisation, l'embase présente un épaulement axial disposé à l'intérieur du joint.

On comprend que l'épaulement s'étend radialement et présente une surface d'appui radiale perpendiculaire à la direction axiale. Cet épaulement axial est donc configuré pour coopérer axialement avec un élément complémentaire. Par exemple, un tel épaulement permet de faciliter un montage par emboitement au sein d'un carter fiche ou d'un carter socle, en fournissant une zone d'appui.

La présente invention concerne également une connexion électrique du genre comprenant un carter socle et un carter fiche muni d'un tel joint.

De préférence, l'embase coopère avec le carter socle et le bord arrondi de la jupe avec une paroi cylindroconique du carter fiche, de telle sorte que la jupe se replie sur elle-même.

BREVE DESCRIPTION DES DESSINS

La description qui va suivre et qui ne présente aucun caractère limitatif doit être lue en regard des figures annexées, parmi lesquelles :

- La figure 1 est une vue en perspective d'un premier mode de réalisation d'un joint pour une connexion électrique du genre comprenant un carter socle et un carter fiche,
- La figure 2 est une vue en demi-coupe radiale du joint selon la figure 1, en pointillés étant représenté le joint lorsqu'il est au contact d'un carter fiche,
- La figure 3 est une coupe axiale partielle d'une connexion électrique munie d'un joint selon le premier mode de réalisation,
- La figure 4 est une vue en demi-coupe axiale d'un deuxième mode de réalisation du joint, en pointillés étant représenté le joint lorsqu'il est au contact d'un carter fiche, et
- Les figures 5A et 5B sont des vues en demi-coupe axiale d'un troisième mode de réalisation du joint, en pointillés étant représenté le joint lorsqu'il est au contact d'un carter fiche.

DESCRIPTION DETAILLEE D'EXEMPLES DE REALISATION

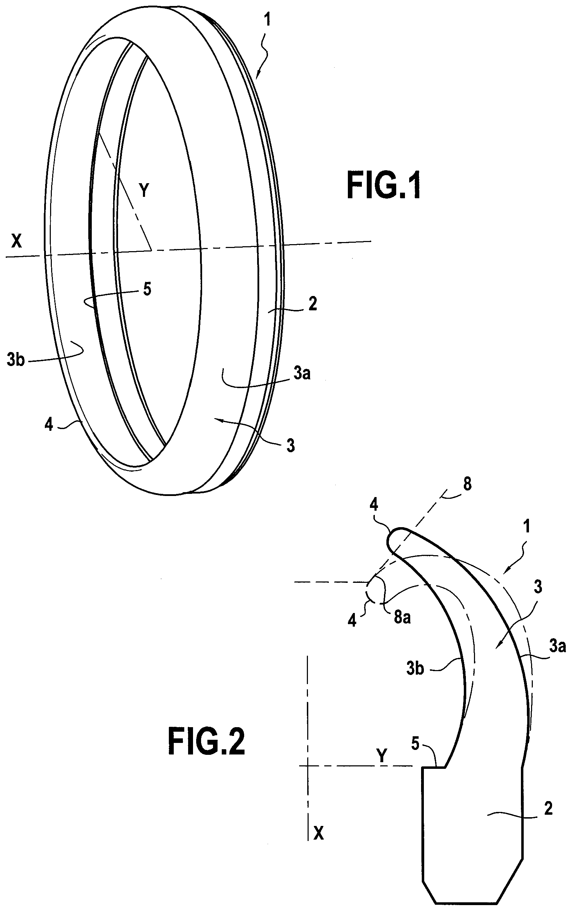

Ainsi qu'on peut le voir sur les figures 1 à 3, un joint annulaire, désigné dans son ensemble par la référence 1, pour une connexion électrique du genre comprenant un carter socle et un carter fiche est représenté. Le joint 1 s'étend selon une direction axiale X et, dans cet exemple est constitué par une embase cylindrique 2 surmontée d'une jupe 3 s'étendant axialement depuis l'embase 2, dont le bord libre 4 est arrondi. L'épaisseur de cette jupe 3 diminue, de façon non-linéaire et continue, depuis l'embase 2 vers ce bord libre arrondi 4. Comme cela est visible sur la figure 2, la jupe 4 présente une paroi extérieure 3a et une paroi intérieure 3b présentant, vues en coupe selon la direction radiale Y, une forme courbe continue. La jupe 3 présente une concavité tournée vers l'intérieur. En d'autres termes, la concavité de la jupe 3 est orientée vers l'axe X du joint 1.

Comme représenté sur la figure 2 notamment, la paroi extérieure 3a de la jupe 3 présente une courbure telle qu'elle déborde de l'embase 2 et que le bord arrondi 4 est situé à l'intérieur du joint 1 par rapport à l'embase 2.

Il a été ainsi déterminé que les courbures de la paroi intérieure 3b et extérieure 3a de la jupe 3 de ce premier mode de réalisation ont, par exemple, pour équation normalisée respective :

$$y = -x^3 - 4{,}5x^2 + 24x + 0{,}32 \qquad (1)$$

$$y = -x^3 + 1{,}03x^2 + 3{,}01x + 67{,}4 \qquad (2)$$

où x représente la distance axiale (en millimètre) depuis l'embase 2 tandis que y représente la position radiale (en millimètre) de la paroi intérieure (cf. équation 1) ou de la paroi extérieure (cf. équation 2) de la jupe 3. Bien entendu, ces équations sont des exemples non limitatifs, les courbures des parois des variantes de ce joint pouvant répondre à d'autres équations.

Selon le présent exemple de réalisation, l'épaisseur de la jupe 3 est inférieure à celle de l'embase 2 au voisinage de celle-ci, de telle sorte qu'il existe un épaulement interne 5.

Un tel joint est réalisé dans un matériau de plus ou moins faible dureté (40 shores par exemple), une bonne tenue aux températures, une bonne résistance aux éléments agressifs extérieurs, tout en lui permettant d'avoir une excellente flexibilité.

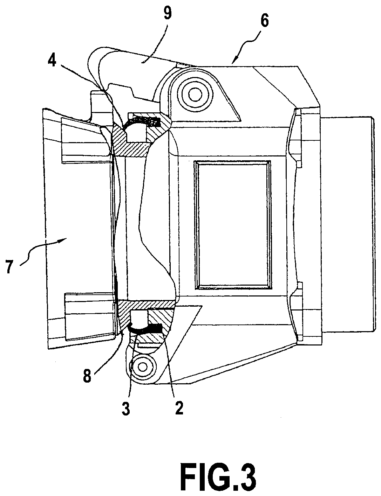

Une connexion électrique du genre comprenant un carter socle 6 et un carter fiche 7 est représentée sur la figure 3 : le carter fiche 7 pénètre dans le carter socle 6 qui est muni d'un joint 1 tel que décrit précédemment en référence aux figures 1 et 2. Le carter fiche 7 est maintenu en position dans le carter socle 6 par un crochet 9 comme cela est connu. Le carter fiche 7 comporte une paroi cylindro-conique 8 se rétrécissant vers son bord libre ou base du cône 8a. Cette paroi cylindro-conique peut être cylindrique ou conique avec un angle au sommet plus ou moins aigu. Dans le présent exemple de réalisation cette paroi cylindro-conique est conique ou formant cône 8.

Lors de l'avancée, ou introduction axiale, du carter fiche 7 vers le carter socle 6, le bord libre arrondi 4 de la jupe 3 vient se positionner à la base du cône 8a qui exerce alors une contrainte axiale sur le bord 4. La longueur axiale ou hauteur de la jupe 3 est telle qu'elle vient très tôt en contact avec le carter fiche 7. L'homme du métier comprendra qu'un tel joint 1 en coopération avec la paroi cylindro-conique 8 permet d'absorber d'éventuels défauts comme le bâillement dans la zone opposée à celle du crochet 9.

Au fur et à mesure que le carter fiche 7 avance, la jupe 3 par son bord libre arrondi 4 se replie sur elle-même, la partie repliée restant en contact permanent avec la paroi conique 8: cet enroulement débute à l'opposé du crochet 9 et se propage vers lui. La surface de contact jupe 3 - paroi conique 8 est optimale et augmente en fonction de l'état d'avancement du carter fiche 7 dans le carter socle 6.

Le fait que la paroi extérieure 3a de la jupe 3 présente une courbure telle qu'elle déborde de l'embase 2, confère à la jupe 3 une meilleure disposition à se replier sur elle-même.

Par ailleurs, au fur et à mesure que le joint 1 se replie sur lui-même, le volume de matière repliée augmente, entraînant par là-même une augmentation des efforts d'enclenchement dans la limite d'un effort d'enclenchement manuel sans utilisation de moyen supplémentaire (levier, etc.), et, par suite, une augmentation de la pression exercée par la jupe 3 du joint 1 sur la paroi conique 8 du carter fiche 7.

La jupe 3 de par sa forme remarquable fait qu'elle travaille principalement en flexion ; la réaction exercée par la jupe 3 du joint 1 sur la paroi conique 8 du carter fiche 7 permet d'assurer l'étanchéité nécessaire dans la zone d'interférence entre ces 2 éléments.

La jupe 3 de par sa forme remarquable ne travaille pratiquement pas en compression. En effet, le bord arrondi 4 de la jupe 3 repliée ne vient jamais en interférence avec le reste du joint 1, notamment avec la paroi intérieure 3b.

La jupe 3 de par sa forme remarquable permet d'absorber les déformations liées au travail dans le temps des différents matériaux en restant en contact avec la paroi conique 8 du carter fiche 7 même en cas d'éloignement important du carter socle 6 (bâillement).

De plus, ainsi que l'aura compris l'homme du métier, à partir du moment où la jupe 3 se replie sur elle-même, le joint 1 a tendance à gonfler créant ainsi une barrière entre le carter socle 6 et le carter fiche 7. Cette barrière constitue un véritable brise-jet qui permet de garantir une étanchéité au jet d'eau sous pression.

Par ailleurs, lorsque l'on désolidarise le carter fiche 7 du carter socle 6, le joint 1 participe à l'expulsion du premier hors du second : en effet, la jupe 3 repliée joue le rôle d'un ressort en exerçant une poussée qui vient s'ajouter aux différents efforts connus participant à l'éjection du carter fiche 7 et participe ainsi à la coupure rapide de l'arc se créant lors de la déconnexion entre les contacts mâles du carter fiche 7 et les contacts femelles du carter socle 6.

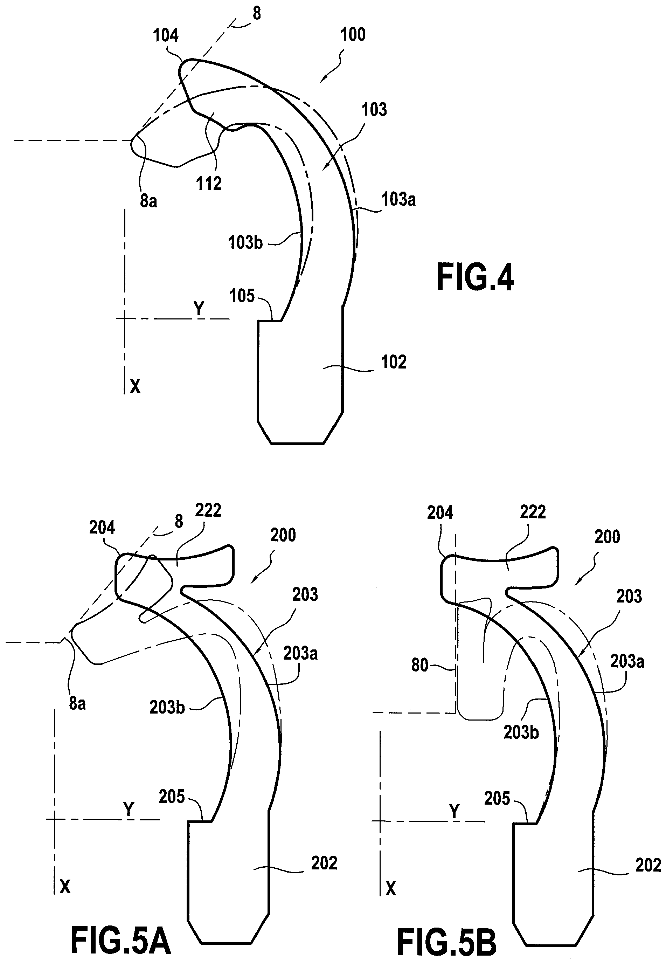

La figure 4 représente un joint 100 selon second mode de réalisation. Ce joint 100 est similaire au joint 1 du premier mode de réalisation à l'exception de la nervure annulaire 112 disposée au voisinage du bord libre 104, et de la courbure des parois interne 103b et externe 103a de la jupe 103. Les autres éléments communs entre le premier mode de réalisation et le deuxième mode de réalisation ne sont pas décrit de nouveau et conservent le même signe de référence incrémentée de 100. Cette nervure 112 est une nervure interne, elle est disposée à l'intérieur de la jupe 103.

La figure 5A représente un joint 200 selon un troisième mode de réalisation. Ce joint 200 est similaire au joint 1 du premier mode de réalisation à l'exception de la nervure annulaire 222 disposée au voisinage du bord libre 204, et de la courbure des parois interne 203b et externe 203a de la jupe 203. Les autres éléments communs entre le premier mode de réalisation et le troisième mode de réalisation ne sont pas décrit de nouveau et conservent le même signe de référence incrémentée de 200. Cette nervure 222 est une nervure externe, elle est disposée à l'extérieur de la jupe 203. La figure 5A représente le joint 200 en coopération avec la paroi conique 8 du carter fiche 7. Par ailleurs, comme représenté sur la figure 5B, grâce à la nervure 222, ce joint 200 est particulièrement bien adapté pour coopérer avec une paroi 80 sensiblement parallèle à la direction axiale X. En effet, grâce à la nervure 222, l'étanchéité réalisée par le joint est dans ce cas particulièrement efficace, la nervure 222 formant une lèvre d'étanchéité complémentaire. Bien entendu, dans ce cas également la contrainte axiale exercée par ladite paroi 80 sur le bord libre 204 amène la jupe à se replier sur elle-même en s'enroulant, comme décrit précédemment.

Ainsi, de manière générale, une nervure externe rend le joint encore plus polyvalent, ce dernier pouvant être utilisé avec une plus grande variété de bord libre de carter.

Bien entendu, on peut envisager une autre variante du joint présentant une nervure interne et une nervure externe.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Joint annulaire pour une connexion électrique du genre comprenant un carter socle (6) et un carter fiche (7), ledit joint s'étendant selon une direction axiale (X) et comprenant une embase (2, 102, 202) cylindrique surmontée d'une jupe (3, 103, 203) s'étendant axialement depuis l'embase (2, 102, 202), la jupe (3, 103, 203) présentant une paroi intérieure (3b, 103b, 203b), une paroi extérieure (3a, 103a, 203a) et un bord libre (4, 104, 204) arrondi, **caractérisé en ce que** la paroi intérieure (3b, 103b, 203b) et la paroi extérieure (3a, 103a, 203a) présentent chacune, vues en coupe radiale, une forme courbe continue, l'épaisseur de la jupe (3, 103, 203) diminuant de façon non linéaire et continue depuis l'embase (2, 102, 202) vers le bord libre (4, 104, 204), la jupe (3, 103, 203) présentant une concavité tournée vers l'intérieur du joint, grâce à quoi la jupe (3, 103, 203) se replie sur elle-même lorsqu'une contrainte axiale est exercée sur le bord libre (4, 104, 204).

2. Joint selon la revendication 1, dans lequel la paroi extérieure (3a, 103a, 203a) présentant une courbure telle que la paroi extérieure (3a, 103a, 203a) déborde de l'embase (2, 102, 202) tandis que le bord libre (4, 104, 204) est situé à l'intérieur du joint par rapport à l'embase (2, 102, 202).

3. Joint selon la revendication 1 ou 2, dans lequel la jupe (3, 103, 203) présente au moins une nervure (112, 222) disposée au voisinage du bord libre (4, 104, 204).

4. Joint selon la revendication 3, dans lequel au moins une nervure (222) est disposée à l'extérieur de la jupe (203).

5. Joint selon la revendication 3 ou 4, dans lequel au moins une nervure (122) est disposée à l'intérieur de la jupe (103).

6. Joint selon l'une quelconque des revendications 1 à 5, dans lequel l'embase (2, 102, 202) présente un épaulement axial (5, 105, 205) disposé à l'intérieur du joint.

7. Connexion électrique du genre comprenant un carter socle (6) et un carter fiche (7), munie d'un joint (1, 100, 200) selon l'une quelconque des revendications 1 à 6.

8. Connexion électrique selon la revendication 7, dans laquelle l'embase (2, 102, 202) coopère avec le carter socle (6) tandis que le bord libre (4, 104, 204) de la jupe (3, 103, 203) coopère avec une paroi cylindro-conique (8) du carter fiche (7), de telle sorte que la jupe (3, 103, 203) se replie sur elle-même.

**Patentansprüche**

1. Ringdichtung für eine elektrische Verbindung von der Art umfassend ein Steckdosen-Gehäuse (6) und ein Stecker-Gehäuse (7), wobei die Dichtung sich in einer axialen Richtung (X) erstreckt und einen zylindrischen Sockel (2, 102, 202) umfasst, auf dem eine sich von dem Sockel (2, 102, 202) aus axial erstreckende Schürze (3, 103, 203) angeordnet ist, wobei die Schürze (3, 103, 203) eine Innenwand (3b, 103b, 203b), eine Außenwand (3a, 103a, 203a) und einen abgerundeten freien Rand (4, 104, 204) aufweist,
**dadurch gekennzeichnet, dass** die Innenwand (3b, 103b, 203b) und die Außenwand (3a, 103a, 203a) jeweils im Radialschnitt gesehen eine kontinuierliche gekrümmte Form aufweisen, wobei die Dicke der Schürze (3, 103, 203) von dem Sockel (2, 102, 202) zu dem freien Rand (4, 104, 204) nicht linear und kontinuierlich abnimmt, wobei die Schürze (3, 103, 203) eine zur Innenseite der Dichtung gerichtete Konkavität aufweist, wodurch sich die Schürze (3, 103, 203) auf sich selbst umschlägt, wenn auf den freien Rand (4, 104, 204) eine axiale Spannung ausgeübt wird.

2. Dichtung nach Anspruch 1, bei der die Außenwand (3a, 103a, 203a) eine Krümmung aufweist, die derart ist, dass die Außenwand (3a, 103a, 203a) über den Sockel (2, 102, 202) herausragt, während der freie Rand (4, 104, 204) in Bezug auf den Sockel (2, 102, 202) innerhalb der Dichtung gelegen ist.

3. Dichtung nach Anspruch 1 oder 2, bei der die Schürze (3, 103, 203) wenigstens eine Rippe (112, 222), die in der Nähe des freien Randes (4, 104, 204) angeordnet ist, aufweist.

4. Dichtung nach Anspruch 3, bei der wenigstens eine Rippe (222) außerhalb der Schürze (203) angeordnet ist.

5. Dichtung nach Anspruch 3 oder 4, bei der wenigstens eine Rippe (122) innerhalb der Schürze (103) angeordnet ist.

6. Dichtung nach einem der Ansprüche 1 bis 5, bei der der Sockel (2, 102, 202) eine axiale Schulter (5, 105, 205), welche innerhalb der Dichtung angeordnet ist, aufweist.

7. Elektrische Verbindung von der Art umfassend ein Steckdosen-Gehäuse (6) und ein Stecker-Gehäuse (7), die mit einer Dichtung (1, 100, 200) nach einem der Ansprüche 1 bis 6 ausgestattet ist.

8. Elektrische Verbindung nach Anspruch 7, bei der der Sockel (2, 102, 202) mit dem Steckdosen-Gehäuse (6) zusammenwirkt, während der freie Rand (4, 104, 204) der Schürze (3, 103, 203) mit einer zylindrisch-konischen Wand (8) des Stecker-Gehäuses (7) zusammenwirkt, derart, dass die Schürze (3, 103, 203) sich auf sich selbst umschlägt.

**Claims**

1. An annular gasket for an electrical connection of the kind comprising a socket-outlet casing (6) and a plug casing (7), said gasket extending in an axial direction (X) and comprising a cylindrical base (2, 102, 202) surmounted by a skirt (3, 103, 203) extending axially from the base (2, 102, 202), the skirt (3, 103, 203) presenting an inner wall (3b, 103b, 203b), an outer wall (3a, 103a, 203a), and a rounded free edge (4, 104, 204), **characterized in that** the inner wall (3b, 103b, 203b) and the outer wall (3a, 103a, 203a) each present a continuously curved shape in radial section view, the thickness of the skirt (3, 103, 203) decreasing in continuous and non-linear manner from the base (2, 102, 202) towards the free edge (4, 104, 204), the skirt (3, 103, 203) presenting a concavity oriented towards the inside of the gasket, whereby the skirt (3, 103, 203) folds over onto itself when axial stress is exerted on the free edge (4, 104, 204).

2. A gasket according to claim 1, wherein the outer wall (3a, 103a, 203a) presents a curve such that the outer wall (3a, 103a, 203a) extends beyond the base (2, 102, 202), while the free edge (4, 104, 204) is situated inside the gasket relative to the base (2, 102, 202).

3. A gasket according to claim 1 or claim 2, wherein the skirt (3, 103, 203) presents at least one rib (112, 222) arranged in the vicinity of the free edge (4, 104, 204).

4. A gasket according to claim 3, wherein at least one rib (222) is arranged on the outside of the skirt (203).

5. A gasket according to claim 3 or claim 4, wherein at least one rib (122) is arranged inside the skirt (103).

6. A gasket according to any one of claims 1 to 5, wherein the base (2, 102, 202) presents an axial shoulder (5, 105, 205) arranged on the inside of the gasket.

7. An electrical connection of the kind comprising a socket-outlet casing (6) and a plug casing (7), provided with a gasket (1, 100, 200) according to any one of claims 1 to 6.

8. An electrical connection according to claim 7, wherein the base (2, 102, 202) co-operates with the socket-outlet casing (6) while the free edge (4, 104, 204) of the skirt (3, 103, 203) co-operates with a cylindrical-conical wall (8) of the plug casing (7) in such a manner that the skirt (3, 103, 203) folds over onto itself.

**FIG.1**

**FIG.2**

FIG.3

**FIG.4**

**FIG.5A**

**FIG.5B**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4173349 A